# EUROPEAN PATENT APPLICATION

(11) **EP 3 617 246 A1**
(43) Date of publication of application: **04.03.2020**
(21) Application number: 18192143.8
(22) Date of filing: 03.09.2018
(51) Int. Cl.: C08G 18/66, C08G 18/76, C08G 18/10, C08G 18/40, C08G 101/00

(54) **NCO-TERMINATED POLYURETHANE PREPOLYMER AND PREPARATION METHOD THEREOF**

(71) Applicant: Covestro Deutschland AG, 51373 Leverkusen (DE)
(72) Inventor: The designation of the inventor has not yet been filed
(74) Representative: Levpat

(57) **Abstract**

The present invention pertains to the field of polyurethanes and refers to an NCO-terminated polyurethane prepolymer, a polyurethane foam produced by using the polyurethane prepolymer and its use in automotive interiors, seats, furniture and the like. The NCO-terminated polyurethane prepolymer is a reaction product comprising the following raw materials: a) at least one isocyanate; b) at least one polyurea polyol; wherein the prepolymer has an NCO content of 3 to 46 wt%, preferably 10 to 40 wt%, and particularly preferably 20 to 40 wt%, based on the total weight of the prepolymer. The polyurethane foam of the present invention has good physical properties and very low aldehyde contents.

## Description

### Technical field

The present invention pertains to the field of polyurethanes. In particular, the present invention refers to an NCO-terminated polyurethane prepolymer, a polyurethane foam produced by using the polyurethane prepolymer and use of the polyurethane foam in automotive interiors, car seat cushions/back cushions, furniture and the like.

### Background

Polyurethane foams are widely used in automotive interiors, car seat cushions/back cushions, furniture and the like. However, the potential problems resulting from the aldehyde contents of polyurethane foams have received increasing attention due to human health concerns. Many countries and regions have introduced laws and regulations that limit the contents of aldehydes, especially for automotive- and furniture-related products. Therefore, there is an urgent need in the industry to find solutions that can achieve low VOC and low odor. In terms of VOC, people are particularly concerned about formaldehyde and acetaldehyde, and thereby how to reduce the contents of formaldehyde and acetaldehyde in polyurethane foams has always been the focus of attention in the industry.

US 2007/0135607 A1 discloses a novel toluene diisocyanate prepolymer and a process for its preparation. Furthermore, this application also refers to a method of producing a polyurethane by forming a blown, cellular polyurethane foam layer on a suitable substrate with a frothed foam backing or a foam backing on a substrate. The novel prepolymer comprises a toluene diisocyanate prepolymer and a small amount of an epoxide.

CN 104321360 B discloses a polyurethane foam having reduced aldehyde emissions, a process for preparing the foam and a method of reducing aldehyde emissions in a foam. The polyurethane comprises a small quantity of a polyhydrazodicarbonamide dispersion polyol added to the isocyanate-reactive component, or a trimerized hexamethylene diisocyanate added to the polyisocyanate component.

CN 104053692 B relates to hybrid polymer polyols. These hybrid polymer polyols comprise the free-radical polymerization product of (A), (B) and (C) in the presence of (D) and (E): (A) a base polyol comprising (1) a polymer modified polyol selected from (a) dispersions of polyureas and/or polyhydrazodicarbonamides in a hydroxyl group containing compound and (b) polyisocyanate polyaddition polyols; and (2) optionally, a polyol having a functionality of 2 to 6 and an OH number of from 20 to 500; (B) optionally, a preformed stabilizer; and (C) one or more ethylenically unsaturated monomers; (D) a free-radical polymerization initiator; and (E) optionally, a polymer control agent. This invention also relates to a process for the preparation of these hybrid polymer polyols, foams prepared from these hybrid polymer polyols and a process for the preparation of these foams.

Despite the above disclosure, there is an urgent need in the industry to find solutions effectively reducing the aldehyde contents, particularly the formaldehyde and acetaldehyde contents.

### Summary of the invention

In one aspect of the present invention, there is provided an NCO-terminated polyurethane prepolymer. The polyurethane prepolymer is a reaction product comprising the following raw materials:
a) at least one isocyanate; and
b) at least one polyurea polyol;
wherein the prepolymer has an NCO content of 3 to 46 wt%, preferably 10 to 40 wt%, and particularly preferably 20 to 40 wt%, based on the total weight of the prepolymer.

Preferably, the isocyanate is diphenylmethane diisocyanate. When the isocyanate is diphenylmethane diisocyanate, the prepolymer has an NCO content of 5 to 32.5 wt%, preferably 10 to 32 wt%, and particularly preferably 20 to 32 wt%, based on the total weight of the prepolymer. The NCO content is measured in accordance with GB/T 12009.4-2016.

Preferably, the isocyanate is toluene diisocyanate. When the isocyanate is toluene diisocyanate, the prepolymer has an NCO content of 5 to 45 wt%, preferably 10 to 40 wt%, and particularly preferably 20 to 40 wt%, based on the total weight of the prepolymer. The NCO content is measured in accordance with GB/T 12009.4-2016.

Optionally, the isocyanate is a mixture of diphenylmethane diisocyanate and toluene diisocyanate.

Preferably, the polyurea polyol is prepared by polymerizing an isocyanate mixture and an amine group-containing compound in a base polyol, wherein the amine group-containing compound is selected from the group consisting of polyamines, hydrazines, hydrazides, ammonia, and mixtures of ammonia and/or urea and formaldehyde.

Preferably, the polyurea polyol has a content of 0.5 to 60 wt%, preferably 5 to 50 wt%, and particularly preferably 10 to 50 wt%, based on the total weight of the prepolymer.

Preferably, the polyurea polyol has a solid content of 5 to 40 wt%, preferably 5 to 25 wt%, and particularly preferably 15 to 25 wt%, based on the weight of the polyurea polyol.

Preferably, the raw materials further comprise c) at least one polyether polyol having a functionality of less than 6, a hydroxyl value of 14 to 300 mgKOH/g and a weight average molecular weight of 300 to 12000 g/mol (calculated according to the hydroxyl value test method of GB/T 12008.3).

Preferably, the raw materials further comprise d) at least one polymer polyol started with glycerol and having a functionality of 3, a hydroxyl value of 16 to 35 mg KOH/g and a solid content of 1 to 60 wt%, wherein the solid content is based on the weight of the polymer polyol.

Surprisingly, it has been found that the polyurethane foam produced by using the polyurethane prepolymer according to the present invention has, besides good physical properties, significantly reduced contents of aldehydes, especially formaldehyde and acetaldehyde, as well as the sum of aldehydes and ketones.

In another aspect of the present invention, there is provided a polyurethane foam. The polyurethane foam is obtained from a reaction system comprising the following components:
a component A, comprising:
   the NCO-terminated polyurethane prepolymer described above;
a component B, comprising:
   B1) one or more polyols;
   B2) one or more catalysts; and
   B3) one or more foaming agents.

Preferably, the component A of the present invention further comprises one or more isocyanates.

The component B1) of the present invention preferably comprises at least one polyether polyol having a functionality of 3 to 6, a hydroxyl value of 14 to 56 mgKOH/g, preferably 20 to 40 mg KOH/g, and an EO content of 5 to 50 wt%, preferably 10 to 25 wt%, wherein the EO content is based on the mass of the polyether polyol.

Preferably, the reaction system of the polyurethane foam of the present invention has an NCO content of 15 to 40 wt%, preferably 20 to 40 wt%, based on the weight of the component A.

Preferably, the component B of the polyurethane reaction system of the present invention does not comprise a polyurea polyol. In this case, a foam having very low aldehyde contents may be produced. Also, a good catalytic stability can be maintained since the component B does not comprise a polyurea polyol. It is due to the fact that the activity of the catalysts will generally be decreased when a polyurea polyol is added to the component B, i.e. an isocyanate-reactive component. In particular, the activity of the catalysts in the component B will disappear after a period of time (for example, more than one month).

Optionally, the component B1) of the polyurethane foam reaction system of the present invention may further comprise at least one polyurea polyol.

Preferably, the polyurethane foam of the present invention has a density of 8 to 700 kg/m³, preferably 30 to 150 kg/m³, and particularly preferably 30 to 100 kg/m³ (measured according to ASTM D3574).

In the polyurethane foam of the present invention, its formaldehyde content is reduced by >70%; in some applications, 100% formaldehyde removal can be achieved. Its acetaldehyde content is reduced by >15%, preferably >20%.

Preferably, the component B further comprises water in an amount of 0.1 to 10 wt%, preferably 0.3 to 5 wt%, based on the weight of the component B.

Preferably, the reaction system of the polyurethane foam of the present invention has an isocyanate index of 65 to 135, preferably 85 to 115.

Surprisingly, the polyurethane foam according to the present invention has, besides good physical properties, significantly reduced aldehyde contents, especially formaldehyde and acetaldehyde contents.

In a further aspect of the present invention, there is provided the use of a polyurethane foam in automotive interiors, car seat cushions/back cushions, and furniture.

In a further aspect of the present invention, there is provided a polyurethane product comprising the polyurethane foam according to the present invention. Preferably, the polyurethane product is a car seat cushion or back cushion. Preferably, the polyurethane product is a piece of furniture. The furniture includes, but is not limited to, a sofa, a pillow, a mattress and the like.

### Detailed description

Specific embodiments for carrying out the present invention are described below.

According to one aspect of the present invention, there is provided an NCO-terminated polyurethane prepolymer which is a reaction product comprising the following raw materials:
a) at least one isocyanate; and
b) at least one polyurea polyol;
wherein the prepolymer has an NCO content of 3 to 46 wt%, preferably 10 to 40 wt%, and particularly preferably 20 to 40 wt%, based on the total weight of the prepolymer.

The isocyanate is preferably a polyisocyanate. The polyisocyanate is selected from the group consisting of 4,4-methylenebis(2,6-diethylphenylisocyanate), tetramethylene-1,4-diisocyanate, hexamethylene diisocyanate (HDI), dodecyl 1,2-diisocyanate, cyclobutane-1,3-diisocyanate, cyclohexane-1,3-diisocyanate, cyclohexane-1,4-diisocyanate, 1-isocyanato-3,3,5-trimethyl-5-isocyanatomethylcyclohexane, hexahydrotoluene-2,4-diisocyanate, hexahydrophenyl-1,3-diisocyanate, hexahydrophenyl-1,4-diisocyanate, perhydro-diphenylmethane 2,4-diisocyanate, perhydro-diphenylmethane 4,4-diisocyanate, phenylene 1,3-diisocyanate, phenylene 1,4-diisocyanate, durene 1,4-diisocyanate, stilbene 1,4-diisocyanate, 3,3-dimethyl 4,4-diphenyl diisocyanate, toluene-2,4-diisocyanate (TDI), toluene-2,6-diisocyanate (TDI), diphenylmethane-2,4'-diisocyanate (MDI), diphenylmethane-2,2'-diisocyanate (MDI), diphenylmethane-4,4'-diisocyanate (MDI), naphthylene-1,5-diisocyanate (NDI), isomers thereof, and mixtures thereof.

In one embodiment of the present invention, the isocyanate is preferably diphenylmethane diisocyanate. When the isocyanate is diphenylmethane diisocyanate, the prepolymer has an NCO content of 5 to 32.5 wt%, preferably 10 to 32 wt%, and particularly preferably 20 to 32 wt%, based on the total weight of the prepolymer. The NCO content is measured according to GB/T 12009.4-2016.

In one embodiment of the present invention, the isocyanate is preferably toluene diisocyanate. When the isocyanate is toluene diisocyanate, the polyurethane prepolymer has an NCO content of 5 to 45 wt%, preferably 10 to 40 wt%, and particularly preferably 20 to 40 wt%, based on the total weight of the prepolymer. The NCO content is measured according to GB/T 12009.4-2016.

Optionally, the isocyanate is a mixture of diphenylmethane diisocyanate and toluene diisocyanate.

One of the raw materials used in the polyurethane prepolymer of the present invention is a polyurea polyol. Polyurea polyol, also known as polyhydrazodicarbonamide polyol, is a modified polyether polyol originally developed by Covestro (formerly Bayer Material Science Co., Ltd.). As early as the 1980s, polyurea polyols began to play a role in the chemical industry, mainly for molding products. In addition to the characteristics of ordinary filled polyether polyols, they have many other advantages, for example, that they can make the foam pass the combustion test without the use of a flame retardant, improve the loading capacity of the foam, and make the cells open when the foam rises to the highest, thereby reducing the content of closed cells, and the like. Preferably, the polyurea polyol useful in the present invention is a white or beige liquid containing a polyurea dispersion and having a relatively high viscosity.

Typically, polyurea polyols are prepared by in situ polymerization of an isocyanate mixture with an amine group-containing compound such as a diamine and/or hydrazine in a base polyol. Preferred base polyols include polyether polyols and polyoxyalkylene polyols. The preparation methods of polyurea polyols can be found in the U.S. Patents US4089835A and US4260530A, the entire contents of which publication are incorporated herein by reference.

At present, there are two processes for preparing polyurea polyols known to those skilled in the art, one of which is a batch production method, and the other is a continuous production method. In the batch production method, isocyanate is gradually dropped into the mixed system of a polyol and a polyamine at a relatively slow speed under rapid stirring to obtain a polyurea polyol. In the continuous production method, polyamine, polyol and isocyanate are rapidly injected into a mixing chamber at different speeds adjusted by pumps of a special equipment at the same time, and the reaction mixture is well mixed immediately under highspeed stirring and rapidly reacts to obtain a polyurea polyol.

In the preparation of the polyurea polyol, the amine group-containing compound suitable for polymerization with the isocyanate mixture is preferably selected from the group consisting of polyamines, hydrazines, hydrazides, ammonia and mixtures of ammonia and/or urea and formaldehyde.

Suitable polyamines include: divalent and/or more multivalent primary and/or secondary aliphatic amines, araliphatic amines, cycloaliphatic amines and aromatic amines such as ethylenediamine; 1,2-propylenediamine and 1,3-propylenediamine; tetramethylenediamine; hexamethylenediamine; dodecamethylenediamine; trimethyldiaminohexane; N,N'-dimethylethylenediamine; 2,2'-bisaminopropylmethylamine; more multivalent ethylenediamine homologs such as diethylenetriamine, triethylenetetramine, and tetraethylenepentamine; propylenediamine homologs such as dipropylenetriamine, piperazine, N,N'-bisaminoethyl-piperazine, triazine, 4-aminobenzylamine, 4-aminophenylethylamine, 1-amino-3,3,5-trimethyl-5-aminomethylcyclohexane, 4,4'-diaminodicyclohexyl-monomethane and 4,4'-diaminodicyclohexylpropane, 1,4-diaminocyclohexane, phenylenediamine, naphthalenediamine; the condensate of aniline and formaldehyde; toluenediamine; bisaminomethylbenzene and the derivatives monoalkylated on one or two nitrogen atoms of the above aromatic amines. The polyamines usually have a molecular weight of 60 to 10000 g/mol, preferably 60 to 1000 g/mol, and most preferably 60 to 200 g/mol.

The hydrazines used may be hydrazine itself, or a monosubstituted or N,N'-disubstituted hydrazine. The substituent may be a C1-C6 alkyl group, a cyclohexyl group or a phenyl group. The hydrazines usually have a molecular weight of 32 to 200 g/mol. Suitable hydrazides include hydrazides of divalent or more multivalent carboxylic acids including, for example, carbonic acid, oxalic acid, malonic acid, succinic acid, adipic acid, sebacic acid, sebacic acid, maleic acid., fumaric acid, phthalic acid, isophthalic acid and terephthalic acid; an ester of a hydrazine monocarboxylic acid and a diol or a polyol and phenol, such as ethylene glycol, propane-1,2-diol, butane-1,2-diol, butane-1,3-diol, butane-1,4-diol, hexanediol, diethylene glycol, triethylene glycol, tetraethylene glycol, dipropylene glycol, tripropylene glycol and hydroquinone; and an amide of a hydrazinylidene monocarboxylic acid (semicarbazide), for example, and the above diamines and polyamines. The hydrazides usually have a molecular weight of 90 to 10000 g/mol, preferably 90 to 1000 g/mol, and more preferably 90 to 500 g/mol.

In special cases, it is also possible to use a certain proportion of isocyanates having a functionality of more than 2 or amines, hydrazines and hydrazides, in particular when used together with the corresponding monofunctional compounds.

In one embodiment of the present invention, the polyurea polyol preferably has a content of 0.5 to 60 wt%, preferably 5 to 50 wt%, and particularly preferably 10 to 50 wt%, based on the total weight of the prepolymer.

Preferably, the polyurea polyol has a solid content of 5 to 40 wt%, preferably 5 to 25 wt%, and particularly preferably 15 to 25 wt%, based on the weight of the polyurea polyol.

Preferably, the raw materials used to prepare the polyurethane prepolymer further comprises at least one polyether polyol having a functionality of less than 6, a hydroxyl value of 14 to 300 mgKOH/g, and a weight average molecular weight of 300 to 12000 g/mol.

Polyether polyols useful in the present invention are usually the reaction product of a suitable initiator or starter compound and one or more alkylene oxides in the presence of a basic catalyst such as KOH, NaOH, KF₃ and the like. These polyether polyols have a functionality, hydroxyl value and molecular weight within the ranges as previously described. Suitable starters or initiators for the polyoxyethylene polyol are alkylene oxide adducts of various suitable initiator molecules. Non-limiting examples include dihydroxy initiators such as ethylene glycol, diethylene glycol, triethylene glycol, propylene glycol, dipropylene glycol, dipropylene glycol, neopentyl glycol, 1,3-propanediol, 1,4-butanediol, 1,6-hexanediol, 1,4-cyclohexanediol, 1,4-cyclohexanedimethanol, hydroquinone, hydroquinone-bis(2-hydroxyethyl)ether, various bisphenols such as bisphenol A and bisphenol F and their bis(hydroxyalkyl)ether derivatives, aniline, various N,N-bishydroxyalkylanilines, alkyl primary amines and various N,N-bis(hydroxyalkyl)amines; trihydroxy initiators, such as glycerol, trimethylolpropane, trimethylolethane, various alkanolamines such as ethanolamine, diethanolamine, triethanolamine, propanolamine, dipropanolamine, tripropanolamine; tetrahydro-initiators such as pentaerythritol, ethylenediamine, N,N,N',N'-tetra[2-hydroxyalkyl]ethylenediamine, toluenediamine, and N,N,N',N'-tetra[hydroxylmethyl]toluenediamine; pentahydro-initiators, such as various alkyl glucosides, especially a-methyl glucoside; hexahydro-initiators such as sorbitol, mannitol, hydroxyethyl glucoside, hydroxypropyl glucoside; octahydro-initiators such as sucrose; initiators having a higher functionality such as various starches and partially hydrolyzed starch-based products and methylol-containing resins and novolac resins, for example those produced by reacting aldehydes, preferably formaldehyde, and phenol, cresol or other aromatic hydroxyl-containing compounds.

The starters or initiators are typically copolymerized with one or more alkylene oxides to form the polyether polyols useful herein. Examples of such alkylene oxides include ethylene oxide, propylene oxide, butylene oxide, styrene oxide, and mixtures thereof. Mixtures of these alkylene oxides may be added simultaneously or sequentially to provide internal blocks, terminal blocks or random distribution of the alkylene oxide groups in the polyether polyol.

In the most common method used to polymerize such polyols, the oxide monomers react with the active hydrogen groups of the polyhydroxy initiator in an addition reaction under basic catalysis, followed by a further addition reaction with the oligomeric polyol portion. Potassium hydroxide and sodium hydroxide are the most commonly used basic catalysts. The polyols prepared by this method may contain a significant amount of an unsaturated monool which is formed by isomerization of the oxypropylene monomers to allyl alcohols under the reaction conditions. This monofunctional alcohol can be used as an active hydrogen site for further oxidative addition.

Another class of suitable polyether polyols are polyoxyalkylene polyols having a low unsaturation (low monool contents). These polyoxyalkylene polyols as defined herein are prepared by alkoxylation of a suitable hydroxyl-containing initiator compound with propylene oxide and ethylene oxide in the presence of a bimetal cyanide catalyst. In the late stage of the polymerization reaction, the amount of ethylene oxide in the ethylene oxide/propylene oxide mixture can be increased to raise the primary hydroxyl content of the polyols. Alternatively, the polyols having a low unsaturation can be blocked with ethylene oxide using a non-DMC catalyst.

In summary, a variety of suitable polyether polyols well known to those skilled in the art can be used in the present invention.

Preferably, the raw materials of the polyurethane prepolymer of the present invention further comprises at least one polymer polyol started with glycerol and having a functionality of 3, a hydroxyl value of 16 to 35 mg KOH/g, and a solid content of 1 to 60 wt%, wherein the solid content is based on the mass of the polymer polyol.

Polymer polyols (Polyether Polyol), also known as vinyl polymer grafted polyether polyols, commonly known as polyether (POP) polymer polyols, are produced by a radical graft polymerization of a common polyether polyol as the base polyether (usually the common soft foam polyether triols, highly active polyethers), and acrylonitrile and/or styrene, methyl methacrylate, vinyl acetate, vinyl chloride or other vinyl monomers as well as an initiator at a temperature of about 100°C under an atmosphere of nitrogen.

Through experiments, it has been surprisingly found that the polyurethane foam produced by using the polyurethane prepolymer according to the present invention has, besides good physical properties, significantly reduced contents of aldehydes, especially formaldehyde and acetaldehyde, as well as the sum of aldehydes and ketones.

According to another aspect of the present invention, there is provided a polyurethane foam. The polyurethane foam is obtained from a reaction system comprising the following components:
a component A, comprising:
   the NCO-terminated polyurethane prepolymer described above;
a component B, comprising:
   B1) one or more polyols;
   B2) one or more catalysts; and
   B3) one or more foaming agents.

In one preferred embodiment of the present invention, the component A of the present invention further comprises one or more isocyanates. Useful isocyanates include, but are not limited to, polyisocyanates as described above.

The polyols of the present invention are preferably one or more polyether polyols, wherein at least one polyether polyol is a polyol started with an amine. The polyether polyols have a functionality of 2 to 8, preferably 3 to 6, and a hydroxyl value of 20 to 1200 mgKOH/g, preferably 20 to 800 mg KOH/g. Useful polyether polyols and methods for their preparation are described in the foregoing description regarding polyether polyols.

In one embodiment of the present invention, the B1) preferably further comprises at least one polyether polyol having a functionality of 3 to 6, a hydroxyl value of 14 to 56 mgKOH/g, preferably 20 to 40 mg KOH/g, and an EO content of 5 to 50 wt%, preferably 10 to 25 wt%, wherein the EO content is based on the weight of the polyether polyol.

Preferably, the reaction system of the polyurethane foam according to the present invention has an NCO content of 15 to 40 wt%, preferably 20 to 40 wt%, based on the weight of the component A.

Non-limiting examples of the catalysts useful in the present invention include tertiary amines such as triethylamine, tributylamine, dimethylbenzylamine, dicyclohexylmethylamine, dimethylcyclohexylamine, N,N,N',N'-tetramethyldiaminodiethylether, bis(dimethylaminopropyl)urea, N-methylmorpholine or N-ethylmorpholine, N-cyclohexylmorpholine, N,N,N',N'-tetramethylethylenediamine, N,N,N',N'-tetramethylbutanediamine, N,N,N',N'-tetramethylhexane-1,6-diamine, pentamethyldiethylenetriamine, dimethylpiperazine, N-dimethylaminoethylpiperidine, 1,2-dimethylimidazole, 1-azabicyclo-[2.2.0]-octane, 1,4-diazabicyclo[2.2.2]-octane (Dabco), and alkanolamine compounds such as triethanolamine, triisopropanolamine, N-methyldiethanolamine and N-ethyldiethanolamine, dimethylaminoethanol, 2-(N,N-dimethylaminoethoxy)ethanol, N,N',N"-tris(dialkylaminoalkyl)hexahydrotriazines such as N,N',N"-tris(dimethylaminopropyl)-hexahydrotriazine, and triethylenediamine. Metal salts such as iron (II) chloride, zinc chloride, lead octoate are also suitable, and tin salts such as tin dioctoate, tin diethylhexanoate and dibutyltin dilaurate, and particularly mixtures of a tertiary amine and an organotin salt are preferred. Furthermore, as a useful trimerization catalyst, potassium acetate and potassium octoate are capable of effectively increasing the conversion rate of the isocyanate trimerization, thereby making the foam better post-cured. The catalysts of the present invention preferably have a content of 0.05 to 2 wt%, more preferably 0.2 to 1 wt%, based on the weight of the component B.

The foaming agents useful in the present invention include physical foaming agents and chemical foaming agents. The physical foaming agents are the liquids which are inert to the polyisocyanate, have a boiling point of less than 100°C, preferably less than 50°C under atmospheric pressure, and evaporate under the conditions of an exothermic polyaddition. Examples of useful physical foaming agents include alkanes such as heptane, hexane, n-pentane and isopentane; cycloalkanes such as cyclopentane and cyclohexane; ethers such as furan, dimethyl ether and diethyl ether; ketones such as acetone and methyl ethyl ketone; alkyl carboxylates such as methyl formate, dimethyl oxalate and ethyl acetate; and halogenated hydrocarbons such as dichloromethane, dichlorofluoromethane, difluoromethane, trifluoromethane, difluoroethane, tetrafluoroethane, chlorodifluoroethane, 1,1-dichloro-2,2,2-difluoroethane, 2,2-dichloro-2-fluoroethane and heptafluoropropane. The useful chemical foaming agents include water. Preferably, the reaction system of the present invention further comprises water in an amount of 0.1 to 10 wt%, preferably 0.3 to 5 wt%, based on the weight of the component B.

In the present invention, one or more chemical foaming agents and/or physical foaming agents may be used, and mixtures of these foaming agents and other substituted or unsubstituted hydrocarbons may also be used.

In one embodiment of the present invention, the polyurethane reaction system of the present invention further comprises a surfactant. The surfactant preferably includes, but is not limited to, an ethylene oxide derivative of a siloxane. The surfactant is present in an amount of 0.1 to 2 pbw, preferably 0.25 to 1 pbw, and particularly preferably 0.35 to 0.8 pbw, based on the weight of the component B.

In certain specific embodiments of the present invention, the component B of the polyurethane reaction system does not comprise a polyurea polyol. In these cases, the purpose of the present application can also be well achieved, that is, a foam having very low aldehyde contents can be produced. Also, a good catalytic stability can be maintained since the component B does not comprise a polyurea polyol. It is due to the fact that the activity of the catalysts will generally be decreased when a polyurea polyol is added to the component B, i.e., the isocyanate-reactive component. In particular, the activity of the catalysts in the component B will disappear after a period of time (for example, more than one month).

Optionally, the component B of the polyurethane foam reaction system of the present invention further comprises at least one polyurea polyol. The selection and preparation of polyurea polyols are as described above.

Preferably, the polyurethane foam of the present invention has a density of 8 to 700 kg/m³, preferably 30 to 150 kg/m³, and particularly preferably 30 to 100 kg/m³ (measured according to ASTM D3574).

Preferably, the reaction system of the polyurethane foam of the present invention has an isocyanate index of 65 to 135, more preferably 85 to 115. The manner in which the isocyanate index is calculated can be found in the relevant part of the Examples.

Through repeated experiments, it has been surprisingly found that the polyurethane foam of the present invention has achieved excellent results in terms of reduced aldehyde contents. In particular, the formaldehyde content of the polyurethane foam of the present invention can be reduced by >70%; in some applications, the formaldehyde content is even reduced by 100%. The acetaldehyde content is reduced by >15%, preferably by 20%. The sum of aldehyde and ketone contents can be reduced by >50%. In addition, it maintains excellent physical properties such as satisfactory elasticity and comfort.

In a further aspect of the present invention, there is provided the use of a polyurethane foam in automotive interiors, car seat cushions/back cushions, and furniture.

In a further aspect of the present invention, there is provided a polyurethane product comprising the polyurethane foam of the present invention. Preferably, the polyurethane product is a car seat cushion or back cushion. Preferably, the polyurethane product is a piece of furniture. The furniture includes, but is not limited to, a sofa, a pillow, and a mattress.

Unless defined otherwise, all technical and scientific terms used herein have the meaning as commonly understood by those skilled in the art. When the definition of a term in this specification contradicts the meaning as commonly understood by those skilled in the art to which the invention pertains, the definition described herein will prevail.

The invention is exemplified by the following examples, but it should be understood that the scope of the present invention is not limited by these examples.

### Examples

Test indication of performance parameters in the examples of the present application:
Foam density refers to the weight of a polyurethane foam per unit volume, measured according to ASTM D3574.
Functionality refers to the value determined according to the conventional formula: functionality = hydroxyl value * molecular weight / 56100; wherein the molecular weight is determined by GPC high performance liquid chromatography.
The isocyanate index refers to the value calculated by the following formula: isocyanate index (%) = (moles of isocyanate groups (NCO groups) in component A / moles of isocyanate-reactive groups in component B) * 100%
VOC/aldehyde contents/the sum of aldehyde and ketone contents, refers to the total weight of volatile organic compounds/aldehyde contents/the sum of aldehyde and ketone contents (in µg/m³), measured according to the bag test method of 10L Tedlar bag.
NCO content refers to the content of NCO groups in the system, measured according to GB/T 12009.4-2016.

### Raw materials and their description

**Table 1 - List of raw materials**

| | |
|---|---|
| A1362 | Highly active long-chain polyether polyol with a hydroxyl value of 28, purchased from Covestro Polymers (China) Co., Ltd. |
| NE-210 | Reactive foaming catalyst, purchased from Evonik |
| NE-1070 | Reactive gel catalyst, purchased from Evonik |
| DEOA | Cross-linking agent, purchased from Evonik |
| B8715LF2 | Silicone oil, purchased from Evonik |
| S240 | Cell opener purchased from Covestro Polymers (China) Co., Ltd. |
| H2O | |
| MDI(Diphenylmethane Diisocyanate) 1 | Modified isocyanate NCO 32.5% for soft foam, purchased from Covestro Polymers (China) Co., Ltd. |
| MDI2 | Isocyanate raw material NCO 33.6%, purchased from Covestro Polymers (China) Co., Ltd. |
| TDI (Toluene Diisocyanate) | Isocyanate raw material NCO 48.2%, purchased from Covestro Polymers (China) Co., Ltd. |

### Preparation of NCO-terminated polyurethane prepolymers

### Synthesis of prepolymer No. 1:

250 g of polyurea polyol was dehydrated at 110°C for further use. 750 g of MDI1 was heated to 80°C, and then 250 g of the dehydrated polyurea polyol was added therein to react at 80°C for about one and a half hours. The NCO content was measured. When the NCO content reached the theoretical value (24.4 wt%), the reaction mixture was discharged and the preparation of prepolymer No. 1 was completed.

### Synthesis of prepolymer No. 2:

500 g of polyurea polyol was dehydrated at 110°C for further use. 500 g of MDI2 was heated to 80°C, and then 500 g of the dehydrated polyurea polyol was added therein to react at 80°C for about one and a half hours. The NCO content was measured. When the NCO content reached the theoretical value (16 wt%), a certain amount of isocyanate 1 was mixed until the NCO content was adjusted to reach 27 wt%. Then the reaction mixture was discharged and the preparation of prepolymer No. 2 was completed.

### Synthesis of prepolymer No. 3:

150 g of polyurea polyol was dehydrated at 110°C for further use. 850 g of MDI1 was heated to 80°C, and then 150 g of the dehydrated polyurea polyol was added therein to react at 80°C for about one and a half hours. The NCO content was measured. When the NCO content reached the theoretical value (28 wt%), the reaction mixture was discharged and the preparation of prepolymer No. 3 was completed.

### Synthesis of prepolymer No. 4:

250 g of polyurea polyol was dehydrated at 110°C for further use. 750 g of TDI was heated to 80°C, and then 250 g of the dehydrated polyurea polyol was added therein to react at 80°C for about one and a half hours. The NCO content was measured. When the NCO content reached the theoretical value (35 wt%), the reaction mixture was discharged and the preparation of prepolymer No. 4 was completed.

### Preparation of polyurethane foams

According to the formulation in the following table, the polyol mixture was mixed. The uniform formulation was reacted with different isocyanates or prepolymers to foam, and then the VOC performances of various foams were compared.

**Table 2 - Component B of the polyurethane foam reaction systems**

| Ingredients | Amount (wt%) |
|---|---|
| A1362 | 94 |
| NE-210 | 0.1-0.3 |
| NE-1070 | 0.3-0.6 |
| DEOA | 0.5-1.5 |
| B8715LF2 | 0.3-0.8 |
| S240 | 0.2-1.5 |
| H2O | 3.9 |

All of the white material (i.e., component B) formulations used in the following examples and comparative examples were the above formulation in Table 2. The mixing ratios of the component B to the different isocyanates or prepolymers are 100: 55-75.

### Example 1 and Comparative Example 1:

The previously synthesized prepolymer No. 1 and the component B shown in Table 2 were mixed and foamed to obtain the polyurethane foam of Example 1. The VOC/aldehyde contents of the foam then measured by the 10 L bag method are shown in Table 3 below.

The mixed isocyanate 1 and the component B in Table 2 were mixed and foamed to obtain the polyurethane foam of Comparative Example 1. The VOC/aldehyde contents of the foam then measured by the 10 L bag method are shown in Table 3 below.

**Table 3 - List of aldehyde contents in Example 1 and Comparative Example 1**

| | Example 1 | Comparative Example 1 |
|---|---|---|
| formaldehyde, µg/m³ | null | 411 |
| acetaldehyde, µg/m³ | 95 | 175 |

It can be seen from the above measurement results that the formaldehyde and acetaldehyde contents of the foam obtained by using the polyurethane reaction system of the prepolymer of the present invention are remarkably lowered when compared with the case using the conventional isocyanate. Specifically, the formaldehyde content decreases from 411 µg/m³ even to a level below the detection line (i.e., not detectable), and the acetaldehyde content is also reduced by about 45%.

### Examples 2, 3 and Comparative Example 1:

The previously synthesized prepolymers No. 2 and D and the component B shown in Table 2 were respectively mixed and foamed to obtain the polyurethane foams of Examples 2 and 3. The VOC/aldehyde contents of the foams then measured by the 10 L bag method are shown in Table 4 below.

The mixed isocyanate 1 and the component B in Table 2 were mixed and foamed to obtain the polyurethane foam of Comparative Example 1. The VOC/aldehyde contents of the foam then measured by the 10 L bag method are shown in Table 4 below.

**Table 4 - List of aldehyde contents in Examples 2 and 3 as well as Comparative Example 1**

| | Example 2 | Example 3 | Comparative Example 1 |
|---|---|---|---|
| formaldehyde, µg/m³ | 38 | 78 | 411 |
| acetaldehyde, µg/m³ | 169 | 146 | 175 |

It can be seen from Table 4 that the amount of polyurea polyol added varies from small to large, which will all have an effect on the reduction of formaldehyde and acetaldehyde contents. Moreover, depending on different applications, the prepolymers of the present invention can be combined with other isocyanates or prepolymers to synthesize the polyurethane foams, and a good aldehyde removal effect can also be achieved in these cases.

### Example 4 and Comparative Example 2:

The previously synthesized prepolymers No. 4 and the component B in Table 2 were mixed and foamed to obtain the polyurethane foam of Example 4. The VOC/aldehyde contents of the foam then measured by the 10 L bag method are shown in Table 5 below.

TDI and the component B shown in Table 2 were mixed and foamed to obtain the polyurethane foam of Comparative Example 2. The VOC/aldehyde contents of the foam then measured by the 10 L bag method are shown in Table 5 below.

**Table 5 - List of aldehyde contents in Example 4 and Comparative Example 2**

| | Example 4 | Comparative Example 2 |
|---|---|---|
| formaldehyde, µg/m³ | 99 | 563 |
| acetaldehyde, µg/m³ | 552 | 662 |
| Sum of aldehyde and ketone contents, µg/m³ | 1426 | 2056 |

It can be seen from the experimental results in Table 5 that, in comparison with the formulation of pure TDI, the foam obtained by the prepolymer of the present invention has a significant reduction of aldehyde contents.

Furthermore, all the above examples have a foam density of 40 kg/m³, and their physical properties are good.

In spite of the foregoing detailed description of the present invention for the purposes of the present invention, it is to be understood that this detailed description is exemplary in nature. Without departing from the spirit and scope of the present invention, various changes can be made by those skilled in the art in addition to the contents defined by the claims.

## Claims

1. An NCO-terminated polyurethane prepolymer, **characterized in that** it is a reaction product comprising the following raw materials:
a) at least one isocyanate; and
b) at least one polyurea polyol;
wherein the prepolymer has an NCO content of 3 to 46 wt%, preferably 10 to 40 wt%, and particularly preferably 20 to 40 wt%, based on the total weight of the prepolymer.

2. The polyurethane prepolymer according to claim 1, **characterized in that** the isocyanate is preferably diphenylmethane diisocyanate, and the prepolymer has an NCO content of 5 to 32.5 wt%, preferably 10 to 32 wt%, and particularly preferably 20 to 32 wt%, based on the total weight of the prepolymer.

3. The polyurethane prepolymer according to claim 1, **characterized in that** the isocyanate is preferably toluene diisocyanate, and the prepolymer has an NCO content of 5 to 45 wt%, preferably 10 to 40 wt%, and particularly preferably 20 to 40 wt%, based on the total weight of the prepolymer.

4. The polyurethane prepolymer according to claim 1, **characterized in that** the polyurea polyol is obtained by polymerizing an isocyanate mixture and an amine group-containing compound in a base polyol, wherein the amine group-containing compound is selected from the group consisting of polyamines, hydrazines, hydrazides, ammonia and mixtures of ammonia and/or urea and formaldehyde.

5. The polyurethane prepolymer according to any one of claims 1 to 3, **characterized in that** the polyurea polyol has a content of 0.5 to 60 wt%, preferably 5 to 50 wt%, and particularly preferably 10 to 50 wt%, based on the total weight of the prepolymer.

6. The polyurethane prepolymer according to any one of claims 1 to 3, **characterized in that** the polyurea polyol has a solid content of 5 to 40 wt%, preferably 5 to 25 wt%, and particularly preferably 15 to 25 wt%, based on the weight of the polyurea polyol.

7. The polyurethane prepolymer according to any one of claims 1 to 3, **characterized in that** the raw materials further comprise c) at least one polyether polyol having a functionality of less than 6, a hydroxyl value of 14 to 300 mgKOH/g and a weight average molecular weight of 300 to 12000 g/mol (determined according to GB/T 12008.3).

8. The polyurethane prepolymer according to any one of claims 1 to 3, **characterized in that** the raw materials further comprise d) at least one polymer polyol started with glycerol and having a functionality of 3, a hydroxyl value of 16 to 35 mg KOH/g and a solid content of 1 to 60 wt%, based on the weight of the polymer polyol.

9. A polyurethane foam, **characterized in that** it is obtained from a reaction system comprising the following components:
a component A, comprising:
the NCO-terminated polyurethane prepolymer according to any one of claims 1 to 8;
a component B, comprising:
B1) one or more polyols;
B2) one or more catalysts; and
B3) one or more foaming agents.

10. The polyurethane foam according to claim 9, **characterized in that** the component A further comprises one or more isocyanates.

11. The polyurethane foam according to claim 9, **characterized in that** the B1) comprises at least one polyether polyol having a functionality of 3 to 6, a hydroxyl value of 14 to 56 mgKOH/g, preferably 20 to 40 mg KOH/g, and an EO content of 5 to 50 wt%, preferably 10 to 25 wt%, based on the weight of the polyether polyol.

12. The polyurethane foam according to claim 9, **characterized in that** the B1) further comprises at least one polyurea polyol.

13. The polyurethane foam according to any one of claims 9 to 12, **characterized in that** the foam has a density of 8 to 700 kg/m³, preferably 30 to 150 kg/m³ (measured according to ASTM D3574).

14. The polyurethane foam according to any one of claims 9 to 12, **characterized in that** the formaldehyde content of the polyurethane foam is reduced by >70%.

15. The polyurethane foam according to any one of claims 9 to 12, **characterized in that** the acetaldehyde content of the polyurethane foam is reduced by >15%.
